(19) Europäisches Patentamt

European Patent Office

Office européen des brevets

(11) **EP 4 694 261 A1**

(12) **EUROPEAN PATENT APPLICATION**

(43) Date of publication:
**11.02.2026 Bulletin 2026/07**

(21) Application number: **24193893.5**

(22) Date of filing: **09.08.2024**

(51) International Patent Classification (IPC):
*H04W 12/06* (2021.01)     *H04W 12/122* (2021.01)
*H04W 12/79* (2021.01)

(52) Cooperative Patent Classification (CPC):
**H04W 12/06; H04W 12/122; H04W 12/79**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vestel Elektronik Sanayi ve Ticaret A.S.**
**45030 Manisa (TR)**

(72) Inventors:
• **AHMED MADNI, Haji Muhammad Furqan**
  **45030 Manisa (TR)**
• **KIHERO, Abuu Bakari**
  **34810 Istanbul (TR)**
• **ARSLAN, Hüseyin**
  **34810 Istanbul (TR)**

(74) Representative: **Grünecker Patent- und Rechtsanwälte**
**PartG mbB**
**Leopoldstraße 4**
**80802 München (DE)**

(54) **PHYSICAL LAYER AUTHENTICATION FOR EXTREMELY LARGE ANTENNA ARRAYS**

(57)    Techniques and methods are described to perform physical layer authentication to identify a legitimate user and/or a potential attacker in the presence of extra-large antenna arrays, based on a received signal being transmitted from a previously authenticated communication device. One or more antenna non-stationary (ANS) parameters are determined from the received signal, and a value of the one or more ANS parameters are obtained from a storage that stores ANS parameters from the previous authentication. The ANS parameters include at least one ANS parameter being a spherical wavefront signature and/or a visibility region signature. Based on the current value of the ANS parameters and the stored ANS parameters, the communication device is authenticated.

**FIG. 3**

## Description

The present disclosure relates generally to wireless communication, and in particular to physical layer authentication (PLA).

## BACKGROUND

The emergence of the fifth generation (5G) of mobile communication marked a significant change in wireless networks, shifting focus towards supporting diverse services with varying performance needs rather than solely emphasizing data rate improvements. This shift introduced services like enhanced mobile broadband (eMBB), massive machine-type communication (mMTC), and ultra-reliable low-latency communication (uRLLC) to accommodate numerous devices and critical applications. The upcoming sixth generation (6G) cellular standards aim to build upon these capabilities by enabling joint communication and sensing (JCAS), facilitating a human-centered digital society across various sectors, such as work, healthcare, education, industry, entertainment, banking, and transportation, where communication is a crucial aspect. Given the diverse applications envisioned for next-generation networks, it is evident that wireless systems may not only handle communication, but may also utilize sensing techniques to gather information about the environment and users, improving overall network performance.

In wireless communication, especially with extremely large antenna arrays (massive MIMO systems), array non-stationarity (ANS) becomes a significant factor due to the spherical wavefront and visibility region effects. This phenomenon impacts various aspects of the received signals, necessitating advanced modeling and adaptive techniques to optimize system performance. However, security remains a primary concern in these deployments due to the wireless medium's open and broadcast nature along with array non-stationarity, making it susceptible to various threats from unauthorized nodes, including spoofing and Sybil attacks. In a spoofing attack, the attacker corrupts legitimate communications by injecting forged identity information, while a Sybil attack involves creating multiple fake identities to appear as distinct legitimate participants, granting the attacker the ability to manipulate network activities. Physical Layer Authentication (PLA) has emerged as an additional security measure alongside conventional cryptography-based techniques, offering a fast, cost-effective, and low-complexity computational security solution compatible with upcoming wireless communication networks such as 6G and beyond. To this end, PLA techniques can be broadly classified into two categories: channel-based schemes and radio frequency (RF)- hardware-based, which have a drawback of being applicable to multipath environments, but may fail in sparse conditions of a few number of paths forming the communication channel.

A unified authentication framework that is applied in sparse scattering environments in both static and dynamic scenarios without performance degradation, which employs Extremely Large Antenna Arrays (ELAA) causing array non-stationary effects is still an open issue to be solved, including exploration of using parameters characteristic for the ELAA. Furthermore, one of the main challenges in the current PLA schemes encapsulates authorizing multiple legitimate nodes simultaneously with different channel conditions to meet the system requirements of the next-generation networks.

## SUMMARY

Methods and techniques are described herein for facilitating physical layer authentication. For that purpose, the present disclosure provides methods and techniques to perform physical layer authentication in sparse ELAA wireless environments, exploiting multiple sparse domains that is suitable for static and dynamic scenarios and enables a robust PLA.

The invention is defined by the independent claims. Some exemplary implementations are provided by the dependent claims.

For example, an apparatus for physical layer authentication is provided, the apparatus comprising: an antenna array for receiving a signal; a receiver configured to: receive, over a wireless channel, the signal from a communication device after a previous authentication; and processing circuitry configured to: determine, based on the received signal, a current value of one or more antenna non-stationary, ANS, parameters including at least one ANS parameter being a spherical wavefront, SW, signature and/or a visibility region, VR, signature for the antenna array; obtain, from a storage, a value of the one or more ANS parameters stored at the previous authentication; and perform authentication of the communication device based on the determined current value of the one or more ANS parameters and the obtained value of the one or more ANS parameters stored.

The above mentioned circuitry may be any circuitry such as processing circuitry including one or more processors and/or other circuitry elements.

Furthermore, a method for physical layer authentication is provided comprising steps of: receiving, by an antenna array, a signal over a wireless channel from a communication device after a previous authentication; determining, based on the received signal, a current value of one or more antenna non-stationary, ANS, parameters including at least one ANS parameter being a spherical wavefront, SW, signature and/or a visibility region, VR, signature for the antenna array; obtaining, from a storage, a value of the one or more ANS parameters stored at the previous authentication; and performing authentication of the communication device based on the determined current value of the one or more ANS parameters and the obtained value of the one or more ANS parameters stored.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

## BRIEF DESCRIPTION OF DRAWINGS

An understanding of the nature and advantages of various embodiments may be realized by reference to the following figures.

FIG. 1 is a block diagram illustrating an exemplary communication system.

FIG. 2a is a block diagram illustrating an exemplary transmitting device to be authenticated by the PLA procedure.

FIG. 2b is a block diagram illustrating an exemplary receiving device employing the PLA procedure of the present disclosure.

FIG. 3 is an illustration of a system model including communication partners Bob, Alice, and attacker. Bob receives a signal composed of a signal of Alice, a signal of the attacker, or a composition of Alice's and attacker's signals, and verifies authentication of Alice.

FIG. 4 is an illustration of the arrangement of the ELAA antenna array of Bob and the antenna element(s) of Alice and/or attacker in the presence of $L_x$ scatterers, including definition of some of the distances and angles entering into the wireless channel model.

FIG. 5 is a flow diagram illustrating exemplary steps of the PLA procedure according to the present disclosure.

Like reference numbers and symbols in the various figures indicate like elements, in accordance with certain example implementations.

## DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be openended terms. Further, the phrase "based on" is intended to mean "based at least partially on" unless explicitly stated otherwise.

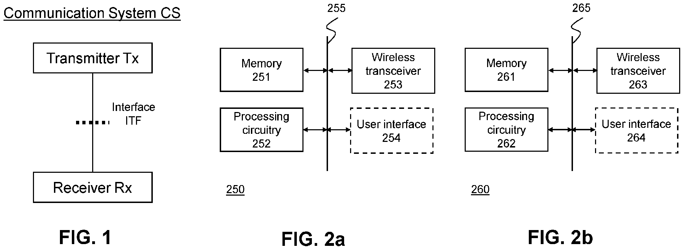

Fig. 1 illustrates an exemplary communication system CS in which Tx represents a transmitter and Rx represents a receiver. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems, such as the recently studied IEEE 802.11 be, and 6G technologies or the like.

In recent decades, wireless communication technologies have advanced significantly in terms of reliability and data throughput. However, security concerns persist in these deployments due to the open and broadcast nature of the wireless medium, rendering it vulnerable to various threats from malicious nodes like spoofing and Sybil attacks. Spoofing attacks involve corrupting legitimate communications by injecting forged identity information, while Sybil attacks create multiple fake identities to appear as distinct legitimate participants, granting attackers the ability to manipulate network activities. To address these challenges, physical layer authentication (PLA) has emerged as an additional security measure alongside conventional cryptography-based techniques, offering a fast, cost-effective, and low-complexity computational security solution. PLA is also compatible with upcoming wireless communication networks such as 6G and beyond, enhancing authentication against diverse security threats.

Physical layer authentication plays a crucial role in security as it focuses on differentiating between authorized and unauthorized entities using the physical layer attributes of devices and environments. This is achieved by harnessing the inherent randomness in wireless communication channels and/or the distinctive features of hardware fabrication processes to gather entropy and offer authentication. PLA techniques can generally be categorized into two main groups: channel-based schemes and radio frequency (RF)-hardware-based methods, each serving to enhance security measures in wireless systems.

Channel-based Physical Layer Authentication (PLA) leverages various wireless channel parameters, such as channel state information (CSI), received signal strength (RSS), channel frequency response (CFR), and channel impulse response (CIR) to authenticate devices. Conversely, RF hardware-based PLA methods exploit imperfections in devices and RF components. Generally, RF hardware-based PLA techniques offer a more consistent signature in dynamic environments due to their ability to handle channel variations effectively. Techniques, such as in-phase/quadrature imbalance (IQI), digital-to-analog converter characteristics, and carrier frequency offset (CFO) imperfections are utilized to create an RF fingerprint for authenticating legitimate nodes. While hardware-based techniques generally provide superior authentication performance compared to channel-based ones, they require additional hardware components for detecting and recognizing RF hardware features in legitimate nodes. To address this, a tracking-based PLA design has been introduced to enhance authentication accuracy in dynamic channel scenarios, particularly in vehicle-to-everything (V2X) communication systems. However, these techniques rely on the channel's richness to detect and extract RF features accurately from received signals.

The above-mentioned approaches are constrained to multipath environments and are ineffective in sparse conditions. There is limited work on efficient PLA schemes specifically designed for sparse static system designs. Existing work leverage features of multiple antenna channel representations in 5G communication networks to enhance PLA by exploiting unique attributes, such as beam patterns and channel sparsity in the angle domain. However, these approaches are restricted to static sparse environments and are not robust against channel variations in highly dynamic settings. Present work addresses authentication challenges in sparse dynamic radio environments by employing an effective machine learning-based spoofing attack detection method. Although the presented model achieves classification based solely on training data, it requires a substantial amount of training data to effectively handle the dynamic nature of multiple antenna channels.

While substantial effort has been dedicated to leveraging wireless channels and hardware for PLA across various technologies like MIMO and multi-carrier systems, there are still ample opportunities for further research in this domain. This is primarily due to the significant shift in channel characteristics and the emergence of new channel features expected in modern networks owing to advancements in technology. For instance, future wireless networks are anticipated to integrate larger antenna arrays with significantly increased sizes, compared to current massive multiple-inputs multiple-outputs (mMIMO) systems. These larger arrays are poised to greatly enhance spectral efficiency, energy efficiency, and spatial resolutions. However, these arrays also introduce array non-stationarity (ANS) due to notable channel variations across the array elements. Different terms, such as extra-large antenna array (ELAA), extra-large MIMO (XL-MIMO), ultra-massive MIMO (UM-MIMO), and extremely large aperture massive MIMO (xMaMIMO) are used in the literature to refer to such arrays. For consistency, the present disclosure refers throughout to the term ELAA. ELAA represents more than a mere extension of traditional mMIMO systems. As a key technology for 5G communication systems, large antenna arrays (LAAs) could improve the transmission rate by orders of magnitude via efficient beamforming/precoding. To further reap the benefits of massive antennas, LAAs are evolving to extremely large antenna arrays (ELAAs) for 6G communications, where the array aperture is dramatically increased to support ultra-high-speed communications. The evolution from LAA to ELAA not only implies a sharp increment in array aperture, but also leads to a fundamental change in the characteristics of the electromagnetic (EM) field. The electromagnetic radiation field can generally be divided into far-field and radiation near-field regions. In the far-field region, the wireless channel could be modeled under the planar wave assumption, where the phase of the array response vector is a linear function of the antenna index. In contrast, the wavefront of near-field channel has to be modeled accurately as spherical, where the phase of near-field array response vector is a non-linear function of the antenna index. The boundary between near-field and far-field is typically quantified by the Rayleigh distance, also known as the Fraunhofer distance, which is proportional to the square of the array aperture normalized by the wavelength.

Since the array aperture is typically not very large in current 5G systems, the near-field range of 5G LAA is negligible. That is why classical beamforming techniques usually direct a beam with a planar wavefront in a specific direction. In contrast, as the number of ELAA's antennas increases dramatically, the Rayleigh distance will be expanded by orders of magnitude. The near-field range of an ELAA could be up to several hundreds of meters, covering a large part of typical cells. In this scenario, it is necessary to perform near-field beamforming to focus the energy of a beam on a desired user location by exploiting the spherical wavefront property. Given this non-negligible near-field range, near-field communications will be of pivotal significance in next-generation communications. Summarizing, "Extremely large" for antenna arrays in the context of ELAAs refers to an array aperture that significantly increases the Rayleigh distance, making the near-field range substantial. For example, a representative number for such an aperture could be around 1 meter, leading to a near-field range of up to several hundreds of meters for 28 GHz.

Unlike traditional techniques, signal processing methods, especially those applicable to XL-MIMO systems, cannot be directly applied. This is primarily attributed to the array non-stationarity (ANS) phenomenon, where the channel characteristics notably differs across XL-MIMO array elements, revealing unique channel traits that is absent in legacy systems. These channel features may provide opportunities for utilization in PLA and identification purposes.

Physically, the ANS phenomenon refers to effects from notable differences in propagation paths, path delay, and/or phase differences as a result of a rather large aperture of the antenna array (i.e. a large number of antenna elements of the antenna array being arranged over a large distance). In this large-scale regime with arrays of, for example, about fifty wavelengths, terminals / user equipments (UEs) "see" the whole array, but non-stationarities occur, because different regions of the array "see" different propagation paths. At even larger dimensions (extra-large scale regime), terminals "see" a portion of the array and inside the first type of non-stationarities might occur. In these large-scale and extra-large scale regimes, the channel may no longer be adequately described by a plane wave, where the wavefronts of the waves radiated from each antenna element superpose to a common plane (far field). In other words, in this small-scale regime, the distance from the antenna (array) to the recipient (e.g. receiver) is much larger than the size / extent of the antenna (array). In contrast to ELAAs, this is no longer the case, where the extent of the antenna array is about of the order of the antenna array-receiver distance. The propagation paths to a receiver from mutually far-distant antennas elements of the array are substantially different, resulting in noticeable propagation delay and Doppler effects (i.e. mobile users, terminal, UEs).

**Array Non-Stationarity:**

Array non-stationarity refers to the phenomenon where the channel characteristics vary across the antenna array. In extremely large arrays, due to the spherical wavefront and varying visibility regions, the signal received by different parts of the array can exhibit different properties that also vary, such as:

**Received Power Variation:** The received power at different antenna elements varies due to the non-uniform distribution of the visibility region and spherical wavefronts. Elements that are closer to the transmitter or within the line-of-sight may receive stronger signals, while those farther away or obstructed may receive weaker signals.

**Path Gain Variation and Path Loss Variation:** The path gain, which is inversely related to path loss, varies across the array. Antenna elements within the visibility region (VR) experience higher path gains (lower path losses), while those outside the VR experience lower path gains (higher path losses).

**Angle of Arrival (AoA) Variation:** The AoA, which is the direction from which the signal arrives at the array, varies across different parts of the array due to the spherical nature of the wavefront. This variation must be considered in beamforming and spatial filtering techniques.

**K-Factor Variation:** The K-factor, representing the ratio of the line-of-sight (LOS) component to the scattered components (i.e. the ratio compares LOS components with non-LOS components), varies across the array. Elements within a strong line-of-sight path exhibit higher K-factors, while those with more scattered paths exhibit lower K-factors.

**Phase Variation:** The phase of the received signal varies across the array due to the spherical wavefront. This variation leads to phase shifts that need to be compensated for in signal processing algorithms.

**Amplitude Variation:** The amplitude of the received signal also varies due to the non-stationary nature of the array. Elements in the visibility region receive stronger amplitudes, while others receive weaker signals.

**Spatial Coherence Variation:** The spatial coherence, or the degree of similarity between signals received at different elements, decreases with the size of the array. Larger arrays exhibit greater non-stationarity, leading to variations in channel correlation across the array.

**Cluster Scattering Variation:** Environmental scatterers cause clustered multipath components. The visibility and strength of these clusters vary across the array, affecting the received signal characteristics at different elements.

These parameter variations can be used as signatures for physical layer authentication, but it is open to include other features that are affected or caused by Array Non-Stationarity across the array. These features are caused by spherical wavefront and visibility region. As discussed in the following, the approach of the present disclosure exploits Array Non-Stationarity effects caused by the SW phenomenon and/or VR phenomenon as signature for physical layer authentication.

In various studies, ANS channel features have been explored as degrees of freedom, enhancing different network aspects. For instance, ANS features have been utilized to expand multiple access, and initial random access in XL-MIMO systems, effectively utilizing the ANS phenomena to enable beam focusing and, consequently, location-based user multiplexing. The beam-focusing feature of ANS has been further explored for enhanced confidentiality in near-field communication.

Concerning physical layer security (PLS), current research has primarily leveraged the beam-focusing feature facilitated by ANS for added security against multiple eavesdroppers with a single legitimate user, focusing on enhanced confidentiality especially in near-field communication scenarios. However, the full potential of channel variations across XLMIMO elements due to ANS channel features remains untapped in PLA-related areas. Additionally, present work explore the impact of adopting a more realistic propagation model and examine the incorporation of user distance as a novel spatial degree of freedom within spherical wavefront (SW) propagation contexts.

However, despite these advancements, practical channel scenarios often involve multiple paths rather than just a line of sight (LoS) channel between the legitimate user and the base station (BS), highlighting the need for Visibility Region-based (VR) channel modeling in real-world scenarios. As such, there is ongoing research to exploit channel variations across XL arrays due to both SW and VR for further advancements in PLA.

The drawbacks of previously proposed authentication schemes may be summarized as follows:

1. Many methods of previous work are designed for rich environments only, and hence are not applicable to poor scattering environments. Hence, the appicability of these methods is limited. applicability

2. PLA schemes utilizing machine learning mechanisms require a substantial amount of training data to adapt to the dynamic nature of multiple antenna channels. This increases the complexity overhead and introduces latency into the system.

3. Hardware-based PLA techniques tailored for dynamic environments operate under the assumption of a rich channel for detecting and extracting RF features. However, current systems often have sparse scattering channels, making current PLA techniques less effective.

4. Security is compromised in the case of co-located attacks, where attackers can approach legitimate users to obtain channel state information. Current PLA schemes are effective only when attackers are in different locations from legitimate users, highlighting a significant security risk in current and future communication networks.

5. Authorizing multiple legitimate nodes simultaneously under varying channel conditions remains a persistent challenge for PLA techniques in both current and next-generation communication networks.

The present disclosure provides an approach for physical layer authentication, which utilizes ANS channel features as novel parameters for enhancing security, specifically focusing on improving physical layer authentication (PLA) to counter manipulation and spoofing attacks. As discussed in the following, by verifying the identity of all involved parties, a reliable and secure communication is enabled. Leveraging ANS channel features in PLA enables both preventing impersonation by adversaries and validating the claimed identity of authorized transmitters, thus ensuring the integrity of communications.

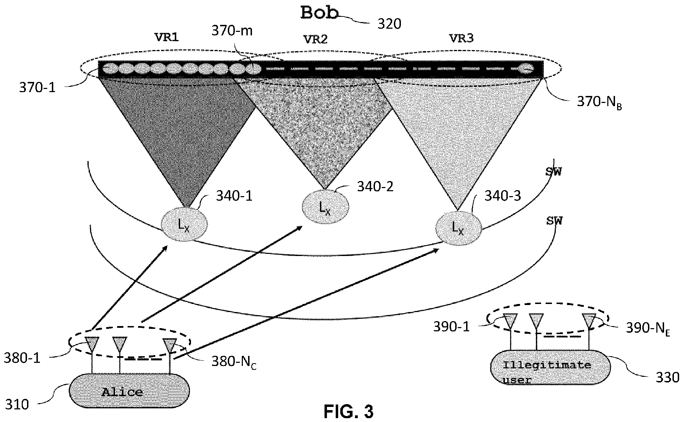

The ANS-parameter-based PLA approach according to the present disclosure may be illustrated by the system model shown in Fig. 3, which may be phrased in terms of an Alice-Bob-attacker model.

Using the terminology in the security literature, Alice 310 is the legitimate sender who initiates the communication and possesses one or more transmission antenna elements 380-1 to 380-$N_c$, with $N_c$ equal to 1 or larger. Alice can represent any kind of user device or communication device, which aims to create a wireless link and exchange information with other user devices (e.g. mobile terminals, mobile stations (STA)), base stations (BS), or access points (AP) within the wireless network. Bob 320 is the intended receiver (base station or access point with a number of $N_B$ receiving antenna elements 370-1 to 370-$N_B$ or another STA). The number of receiving antenna elements $N_B \gg 1$, with the result that the respective antenna array of Bob has a large spatial extent (i.e. extra-large XL). An attacker 330 (illegitimate user) may have the same or higher capability as Alice and may also have one or more transmission antenna elements 390-1 to 390-$N_c$. It is noted that the number $N_c$ of transmission antenna elements of Alice and attacker may be same or different. In a typical ELAA scenario, $N_B$ is larger than the number of transmission antenna elements $N_c$ of Alice and/or attacker.

The attacker 330 tries to send messages to Bob over a wireless link in order to impersonate Alice. Hence, Alice and the attacker operate as communication devices, respectively. Alice 310 and/or attacker 330 may be implemented by transmitting device 250, with Fig. 2a showing an exemplary implementation. Bob 320 may be implemented by receiving device 260, with Fig. 2b showing an exemplary implementation. In general, transmitting device 250 and/or receiving device 260 may also perform functions of receiving and transmitting, respectively. Accordingly, transmitting device 250 and receiving device 260 may also referred to as transmitting-receiving device or transmitter-receiver or transceiver.

Fig. 2a illustrates the transmitting device 250 according to some exemplary embodiments, which communicates with a receiving device 260 performing the PLA procedure of the present disclosure detailed later. The transmitting device 250 may be a part of any wireless communication device such as a station (STA) or access point (AP), or, in general base station (BS) or terminal (i.e. user equipment UE). The transmitting device 250 comprises memory 251, processing circuitry 252, and a wireless transceiver 253 (or a wireless transmitter 253), which may be capable of communicating with each other via a bus 255. The transmitting device 250 may further include a user interface 254. However, for some applications, the user interface 254 is not necessary (for instance some devices for machine-to-machine communications or the like). The transmitting device 250 may be the transmitter Tx of the communication system CS in Fig. 1.

The memory 251 (also referred to as storage) may store a plurality of firmware or software modules, which implement some embodiments of the present disclosure. The memory may 251 be read from by the processing circuitry 252. Thereby, the processing circuitry may be configured to carry out the firmware/software implementing the embodiments. The processing circuitry 252 may include one or more processors, which, in operation, prepare data for transmission. In particular, the circuitry 252 is configured to map sequential portions of the data onto respective modulation symbols according to a target modulation. In an implementation example, the target modulation is one of phase shift keying, PSK, pulse amplitude modulation, PAM, and quadrature amplitude modulation, QAM, but may not be limited to the target modulations listed. For example, amplitude phase shift keying (ASK) or frequency shift keying (FSK) may be also used to map sequential portions of the data onto respective modulation symbols according to ASK or FSK. A further option is to combine target modulations. As such it is understood, that the above-listed target modulations also cover their respective subsets. PSK, for example, covers BPSK, DPSK, M'ary PSK, QPSK, OQPSK etc.. FSK covers BFSK, M'ary FSK, MSK, GMSK etc.. ASK covers on-off keying, M'ary ASK etc.. QAM is commonly referred to as M'ary QAM covering rectangular QAM or circular QAM. The modulation symbols include a first modulation symbol and a second modulation symbol. In a particular exemplary implementation, BPSK or QPSK are used to generate the modulation symbols. Such lower-order modulations are robust and their application for pairing modulation may provide further improvement as discussed herein.

The wireless transceiver 253 is configured to transmit a signal to the receiving device 260 shown in Fig. 2b which operates are further detailed below. The receiving device 250 may be the receiver Rx of the communication system CS in Fig. 1. Before passing the signal to an analog front including a single or multiple antennas, the transceiver may perform possibly further operations. Such further operations may include an inverse transformation such as the inverse fast Fourier transform (IFFT) or inverse discrete cosine transform (IDCT), in accordance with the desired (orthogonal or non-orthogonal) frequency division multiplex. Moreover, the transformed time-domain symbols may then be modulated onto the actual carrier, amplified or the like.

In an exemplary implementation, the transmitting operation of the transceiver 253 includes further orthogonal frequency division multiplex, OFDM, modulation of the carriers including carriers carrying the symbols of the signal. Alternatively, non-OFDM waveforms may be used for modulating the carriers that carry the respective symbols, which are transmitted using a single antenna. Alternatively, the symbols may be transmitted using multiple antennas.

As Fig. 2a shows, the memory 251 may be separated from the processing circuitry 252. However, this is only an example. In general, the memory 251 may be implemented within the processing circuitry 252, and e.g., within the one or more processors. The term "memory" refers to any type of long term, short term, volatile, nonvolatile, or other memory and is not to be limited to any particular type of memory or number of memories, or type of media upon which memory is stored.

The wireless transceiver 253 may operate according some known resource multiplexing and/or multi-user multiplexing scheme. In general, any currently used scheme such as those employed in the IEEE 802.11 framework or in the 5G/6G framework are applicable. In particular, possible examples include the OFDM, OFDMA, or non-orthogonal multiple access (NOMA) or the like.

As illustrated in Fig. 3, Alice 310, Bob 320, and attacker 330 may be referred to as nodes forming a communication network, with wireless links between the attacker, Alice, and Bob, respectively. Hence, the nodes may correspond to the transmitting device 250 and receiving device 260 in Figs. 2a and 2b, respectively, and their processing is described in the following in view of the PLA procedure of the present disclosure.

As illustrated in Fig. 3, the propagation paths between Alice and Bob and or the attacker and Bob may not all be line of sight (LOS) paths, but may be paths composed of partial paths as a result of the signal transmitted by Alice and/or attacker being scattered by a number of $L_X$ scatterers. The number of scatterers may be equal to 0 or larger. The case of $L_X$ = 0 may be considered as the pure LOS case, in which case the wireless channel consists of LOS paths.

The objective of PLA is to enable Bob to recognize messages from Alice as genuine and reject those messages from the attackers. In other words, Bob receives messages from legitimate Alice and/or the illegitimate attacker, and Bob has to authenticate Alice as legitimate and the attacker as being non-legitimate. All nodes may be equipped with multiple antenna arrays in a uniform linear manner for simplicity. Alternatively, the nodes can be also equipped with other types of arrays, such as uniform/non-uniform planar array, circular array, cylindrical array, etc. The channel between the nodes is assumed to be a sparse, multipath, time-varying channel.

The PLA process of the present disclosure includes two stages: training and verification. In the training stage, Bob verifies Alice's identity using higher-layer protocols and extracts an ANS-based signature from the received signal, which is stored in a database. This stage assumes that only Alice and Bob nodes exist.

Fig. 2b shows an implementation of receiving device 260 according to some exemplary embodiments, representing Bob perfoming the ANS-based PLA process to verify Alice or identify an illegitimate user (attacker). The receiving device 260 comprises memory 261, processing circuitry 262, and a wireless transceiver 263 (or a wireless receiver 263), which may be capable of communicating with each other via a bus 265. The receiving device 260 may further include a user interface 265. However, for some applications, the user interface 265 is not necessary (for instance some devices for machine-to-machine communications or the like).

The memory 261 may store a plurality of firmware or software modules, which implement some embodiments of the present disclosure. The memory may 261 be read from by the processing circuitry 262. Thereby, the processing circuitry may be configured to carry out the firmware/software implementing the embodiments. The processing circuitry 262 may include one or more processors, which, in operation, determines data.

In some embodiments, the processing circuitry 262 performing the functions described herein may be integrated within an integrated circuit on a single chip. The processing circuitry may also implement a control function to control the transceiver 263 to receive the signal. The transceiver 263 is configured (e.g. by the processing circuitry) to receive a signal and obtain symbols carried therein. For example, the processing circuitry 262 may configure (control) the transceiver 263, over the bus 265, to receive the signal. The transceiver may be, for example, a wireless transceiver obeying some standard or some pre-defined rules in order to comply with the transmitter, e.g. the one described with reference to Fig. 2a.

In an exemplary embodiment, the communication device (e.g. representing Alice and/or attacker) has been previously authenticated, and transmits over a wireless channel a signal to the receiving device 260 (representing Bob). Such previous authentication may be performed in an upper layer. The upper-layer is higher than the physical layer within which the PLA is performed. An upper layer authentication may be based on an extensible authentication protocol (EAP)-based authentication methods and/or transport layer security (TLS)-based methods.

The receiving device comprises an antenna array for receiving the signal. The transceiver/receiver 263 is configured to receive the signal from the communication device such as the transmitting device 250 of Fig. 2a. The processing circuitry 262 may include one or more processors, which is/are configured to determine the data from symbols carried by the signal. Thereby, it is assumed that sequential portions of the data are mapped onto respective modulation symbols according to a target modulation.

The processing circuitry 262 may include one or more processors, which is/are configured to determine, based on the received signal, a current value of one or more antenna non-stationary (ANS) parameters. The ANS parameters may also be referred to as ANS attributes or ANS signatures within the extra-large (XL) antenna array for PLA. Various ANS attributes cater to single and multi-user scenarios across sparse and rich environments. These ANS features may stem from two propagation phenomena, namely spherical wavefront (SW) and cluster visibility region (VR). The ANS parameters may include at least one ANS parameter being the SW signature and/or the VR signature for the antenna array.

To determine array non-stationarity parameters from the received signal, several techniques can be utilized, often involving advanced signal processing and estimation algorithms. A common approach involves transmitting known signals and estimating various parameters for each antenna by computing the correlation between the received pilot signals and the known transmitted pilot signals. In other words, the pilot signals are used as reference signals that are known to the receiving-side and transmitting side, such as the transmitting device 250 of Fig. 2a (Alice and/or attacker) and the receiving device 260 of Fig. 2b (Bob). This allows for the analysis of parameter variations across the array, leading to the determination of non-stationarity parameters. The main steps may be summarized as follows:

(1) Transmit known pilot signals from the transmitter to the receiver.

(2) Collect the received signal data from each of the antenna elements in the ELAA.

(3) Preprocess the collected data to remove noise and interference.

(4) Apply channel estimation algorithms to estimate the channel parameters for each antenna element.

(5) Analyze the variations in channel parameters across the array to determine the non-stationarity parameters.

In the following, the exemplary SW signatures and VR signatures are detailed.

A. Spherical wavefront (SW) based signatures:

With ELAA, communication predominantly occurs within the near-field region of the array, encompassing most UEs and scatterers $L_x$. The near-field of an antenna array is where the signal propagates over a distance smaller than the Fraunhofer distance of the array, given by, $df = 2D^2/\lambda$, where D refers to the array aperture size and $\lambda$ is the wavelength of the signal. In the near-field, electromagnetic waves propagate with a spherical wavefront (SW) instead of the planar wavefront as typically assumed in far-field scenarios. This means that the wavefront is curved, so that the curvature of the SW introduces an additional phase shift to each antenna element of the array and varies with the index of the antenna element across the ELAA. This variation results in different angles of arrival (AoAs) for each element, leading to varying effective aperture areas and polarization mismatch losses. As a consequence, SW propagation induces significant variations in received power, path gain, path loss, AoAs, K-factor, phase, amplitude, spatial coherence, and cluster scattering etc. across the array. Moreover, since the SW curvature changes with propagation distances, these channel variations are greatly influenced by distance, thereby enhancing spatial/locational channel distinctiveness. These features caused by SW can be used for PLA, meaning the SW signature may include variations of any of received power, path gain, path loss, Angle of Arrival, K-factor, phase, amplitude, spatial coherence, cluster scattering, and SW curvature. The K-factor is the ratio of the signal power in the direct LOS path with respect to the power of the scattered and reflected paths.

Accordingly, for users, various SW-based channel characteristics over ELAA for PLA may be utilized, such as:

- Mapping of received power variation across ELAA based on SW.

- Path loss mapping across ELAA based on SW.

- Mapping of Angle of Arrival (AoA) variation across ELAA based on SW.

- Characteristics of K-factor mapping based on SW.

- Phase variation.

- Amplitude variation.

- Spatial coherence variation.

- Cluster scattering variation.

- Utilizing joint angle and location-based beam focusing for PLA. In the near field, managing the spherical wavefront of signals allows for precise beam focusing at specific locations in both range and angle.

• Exploring any other uniquely identifiable effects on ELAA due to SW for PLA. It is noted that the above SW effects resulting in unique ANS signatures that may be exploited for PLA are not limiting, meaning further effects on ELAA may be used as long as these effects are measurable and/or may be determined from the received signal.

*B. Visibility region (VR) based signature:*

In a complex propagation environment, different sections of the extremely large antenna array (ELAA) may encounter distinct sets of blockages and scatterers / clusters. As a result, different array elements (i.e. antenna elements of the antenna array) experience varying channel responses based on the visible scatterers and terminals, leading to the formation of visibility regions (VRs). Fig. 3 exemplifies such visibility regions VR1 to VR3 for the antenna array 370 of the receiver 260 (Bob 320), where the antenna elements 370-1 to 370-$N_B$ are partitioned into three groups of antenna elements, each including a number of antenna elements less than $N_B$. Each antenna group forms a visibility region. The VRs may be overlapping and / or non-overlapping. For example, in Fig. 3, VR2 overlaps with its neighbouring VRs, i.e. VR1 and VR3. Alternatively, VR2 may overlap with VR1 but not with VR3 and vice versa. Hence, the presence of scatterers $L_x$ may cause at least a partial blocking of a number of antenna elements of the array of Bob, some of which may be "seen" by Alice but not the attacker and vice versa. Due to the rather larger spatial extent of the antenna array of Bob, this results in significant spatial channel decorrelation among the ELAA elements. The VR phenomenon induces notable variations in channel parameters, such as received power, path gain, path loss, angle of arrival (AoA), K-factor, phase, amplitude, spatial coherence, cluster scattering, etc., across the array elements, even in environments with poor scattering. Depending on the node's location and the distribution of scatterers in the propagation environment, each node may exhibit a different number of VRs, which may vary in size and overlap status with other VRs.

Traditionally, identifying the a number of VRs of a single node (assuming a total number $L_{VR}$ of VRs for Bob node) involves measuring the received power across the number of NB antenna elements $N_B$ of the ELAA from the signal transmitted by the node, i.e. by receiver 260. For each identified (*l*-th) VR, its starting point ( $n_b^l$ ) and ending point ( $n_d^l$ ) on the array are determined. Hence, the size of a VR may be given in terms of a distance between ending point $n_d^l$ and starting point $n_b^l$. Alternatively or additionally, the size of the VR may be given by the number of antenna elements said VR entails. A VR (non-overlapping, partially overlapped, fully overlapped) can be determined based on adjacent antenna array elements, each of which having a received power that is equal to or exceeds a predefined power threshold ($P_{thr}$) to form a VR. Alternatively or additionally, an average received power may be used to determine whether an antenna element exceeds the power threshold, and hence belongs to a VR. A same value of the predefined power threshold may be used to determine the number of VRs. This means that the same power threshold may be applicable for all antenna array elements of the ELAA. Alternatively, a set of two or more predefined power threshold may be used. Using a set of two or more power thresholds may be suitable in cases when there are significant power differences in various regions. In this way, the array elements of the ELAA may be grouped into VRs with a higher granularity as compared when the same power threshold is used for all antenna elements of the ELAA. Non-adjacent groups of array elements with received power above the threshold are considered non-overlapping VRs. However, it's important to note that this method can only identify the presence of multiple non-overlapping VRs.

One of the way for the detection of overlapping VRs, whether partial or complete, is the beam space representation of channel. The beamspace representation of MIMO channels reduces the dimensionality of the parameter space, so that the interference management is improved, and the channel estimation is simplified, thereby enhancing robustness to channel variability and effectiveness in optimizing MIMO systems. Additionally, the beamspace domain is well-suited for observing and exploiting near-field concepts, such as visibility regions (VRs), whether overlapped or non-overlapped. It is also noted that often the number of VRs corresponds to the number of beams (or principal components) in the beamspace domain, as determined by the estimated channel between nodes. The angular coordinates (virtual AoDs and AoAs) of each beam indicate the angular locations of environmental clusters relative to the transmitting and receiving nodes. It is known that the beamspace domain offers a superior approach for understanding and leveraging near-field concepts such as VRs.

The distribution of nodes and scatterers in the propagation environment influences the number and size of VRs per node, with the potential for partial or complete overlap among VRs or with VRs from other nodes. These features caused by the VRs can be used for PLA, meaning the VR signature may include any of size of the VR, received power, path loss, K-factor, angle of arrival, phase, amplitude, spatial coherence, cluster scattering, ratio of number of antenna elements of the antenna array overlapping with a different VR and the size of said VR, number of VRs, types of VRs, evolution of the VRs, and distribution of the VRs within the antenna array. The listed features of the VR is not limiting, and may include other features that are affected or caused by ANS across the array. These parameters can be used as signatures for physical layer authentication. Additionally, other VR-based signatures, such as the ratio of the number of antenna elements of the antenna array overlapping with different VRs and the size of said VRs, the number of VRs, types of VRs, evolution of the VRs, and distribution of the VRs within the antenna array, can also be used as signatures for physical layer authentication. A type of a VR may be overlapping VR, partial overlapping VR, or non-overlapping VR. The distribution of VRs may be a distribution of a position of the VRs with respect to positions of the antenna elements of the array. In other words, the position of the antenna elements may define a positional space within which the VRs are located. A position of a VR may be given by an average position determined by averaging the positions of the antenna elements that belong to said VR. It is noted that the VR signature "VR distribution" includes information related to said distribution, such as center position / peak position, median, mean, etc. which may be a VR signature. An evolution of the VRs refers to temporal change of any of the VR signatures, such as size of the VR, received power, path loss, K-factor, ratio of number of antenna elements of the antenna array overlapping with a different VR and the size of said VR, number of VRs, types of VRs, and distribution of the VRs within the antenna array. Hence, a temporal change of any of above VR signatures may result in a spatial change of said VR signatures. It is noted that the evolution of the VRs is a result of the inherent non-stationary characteristics of ELAAs and is reflected in the spatial-temporal behavior of ANS parameters.

Accordingly, for users, various VR-based channel characteristics over ELAA for PLA may be utilized, such as:

- The size of the given VR for PLA, where the size of VR is defined by the number of array elements.

- Characteristics of VR-based received power across ELAA.

- Characteristics of VR-based path loss across ELAA.

- Characteristics of VR-based K-factor across ELAA.

- Determining the number of VRs (non-overlapping, partially overlapped, fully overlapped).

- Identifying different types of VRs (non-overlapping, partially overlapped, fully overlapped).

- Assessing the ratio between the overlapped size and the total size of the given VR.

- Observing the evolution of VR over time and array (gradually appearing/disappearing, suddenly appearing/disappearing).

- Exploring any other uniquely identifiable effects on ELAA due to VR for PLA. The above discussed effect on ELAA due to VR are not limiting, and may include further effects / signatures that can be observed on the ELAA from the received signal.

The various ANS parameters of the SW signature and/or VR signature discussed above are non-limiting examples to characterize the near-field of the ELAA and exploit them for PLA. Beyond the ANS features of the near field of ELAA discussed above, other near-field features can be considered instead of the above discussed ANS features and/or may be combined with the above-discussed ANS features, so as to create unique user signatures at the receiver, such as the receiving device 260 of Fig. 2b that performs the ANS-based PLA. The present disclosure leverages multiple ANS attributes in ELAA for PLA, supporting both single and multi-user scenarios in both sparse and rich environments. This approach effectively counters manipulation and spoofing attacks by verifying the identity of all involved parties, ensuring reliable and secure communications. The approach of the present disclosure can be used with Multi-Polarization, Finite Depth Beam Focusing, Near-Field Beam Splitting Effect, Bessel beams, Airy beams, and vortex beams.

These other ANS features may include but are not limited to:

- Multi-Polarization: Including co-polarized and cross-polarized channels.
Multi-polarization refers to the use of multiple polarization states of electromagnetic waves in wireless communication systems. A multi-polarized near-field spherical wave channel involves transmitting and receiving electromagnetic waves within the near-field region using multiple polarization states, exhibiting spherical wavefront characteristics. This allows the channel to carry more information and be more robust against polarization mismatch and interference. Multi-polarization can be exploited with the approach of the present disclosure for the unique identification of nodes based on the observed signal at the receiver, facilitating physical layer authentication.

- Finite Depth Beam Focusing.
This technique focuses the electromagnetic beam to a specific, finite depth in the near field, creating a concentrated energy region in both angle and range domains confined to a particular spatial region. This feature can be integrated with the approach of the present disclosure for physical layer authentication.

- Near-Field Beam Splitting Effect.
  This phenomenon involves splitting a single electromagnetic beam into multiple beams within the near field. In a near-field reconfigurable intelligent surface (RIS), a phase shifter-based beamformer can produce a focused beam aligned to a specific location, providing beam focusing gain. While narrowband systems benefit from such beamformers, broadband systems may experience array gain loss due to different frequencies focusing at different locations, known as the near-field beam splitting effect. This effect, despite complicating energy alignment in broadband systems, allows for controlling the angular range of beam coverage at different frequencies by designing system parameters, which can be used with the approach of the present disclosure for physical layer authentication.

- Bessel Beams, Airy Beams, and/or Vortex Beams.
  The present disclosure exploits ANS features at the array caused by spherical wavefronts and the visibility region concept. The use of unique features caused by spherical wavefronts at the receiver for physical layer authentication can extend to new wavefront types beyond spherical waves in the near field, such as Bessel beams. Bessel beams are non-diverging beams focusing the signal along a line and are self-healing, allowing the signal to regenerate after an obstacle. Airy beams, which are non-diffracting and focus along a curving line, can circumvent obstacles. Vortex beams have helically distributed phase wavefronts, distinguishable by the periodicity of the helical phase, embodying their intrinsic modes. These unique properties can be leveraged by the approach of the present disclosure for enhanced physical layer authentication.

These near-field characteristics, such as the number of paths forming the channel between Bob and Alice and/or the attacker, path strength, cluster structure characteristics, and spatial continuity, will also impact the unique user signatures in the near field. In wireless communication, the near-field concept refers to the region close to the transmitting antenna where the electromagnetic field does not yet exhibit a plane wave behavior typical of the far field. In this region, the characteristics of the channel between the transmitter (Alice) and the receiver (Bob), or any potential attacker, are influenced by several factors. Key near-field characteristics include the number of paths forming the channel, path strength, cluster structure characteristics, and spatial continuity.

The number of paths refers to the multiple signal trajectories caused by reflections, diffraction, and scattering. Path strength indicates the power or intensity of these paths. Cluster structure characteristics describe how these paths group together, while spatial continuity refers to the consistency of these channel properties over space. These near-field features are significantly influenced by the type of environment and the amount of scatterers present. For example, an environment with many objects causing reflections (a rich scattering environment) will have different near-field characteristics compared to an open space with few obstacles. These unique near-field properties can create distinct user signatures that are crucial for identifying and authenticating devices in close proximity. To summarize, near-field features are determined by the complex interactions of signals with the surrounding environment, and these features can be leveraged to enhance the security and identification of devices in wireless communication systems.

In addition or alternatively, joint-near-far field (JNFF) signatures may be exploited in a transition region of the near and far fields that enables PLA in particular in said transition region. This means that signatures of the near-field and of the far-field are jointly used for the PLA within the transition region In the far field, the plane wave concept is utilized, and conventional far field-based signatures can be applied in both sparse and rich environments. These signatures can be based on various domains, such as Angle, Angle-Delay, Delay-Doppler, Doppler-Angle, or Delay-Doppler-Angle, as well as on the magnitude and phase of the channel state information. Note the transition region refers to a spatial region, where the wireless channel may not solely described in terms of near-fields or far-fields. The spatial extent of the transition region may depend on a number of ELAA, a number users (legitimate and non-legitimate), a number of reception antenna elements of the receiving device, a number of transmission antenna elements of the transmission device, and the respective spatial arrangement of said antenna elements. Hence, JNFF signatures may refer to a joint signature which entails one or more of above ANS features. Employing such joint signatures may be particularly relevant for Integrated Sensing and Communication (ISAC) applications, where nodes can be identified by unique signatures using the near fields to jointly estimate distance and velocity with limited bandwidth, using a single array. The approach of the present disclosure can authenticate Integrated Sensing and Communication (ISAC) applications by leveraging the spherical wavefront features in the near field. This capability enables joint estimation of distance and velocity, which can serve as a distinctive signature for physical layer authentication according to the approach of the present disclosure. The near field features are useful for PLA in ISAC.

As mentioned above, in the so-called training phase, Bob verifies Alice in a previous authentication. Such authentication may include determining the one or more ANS parameters, including at least one ANS parameter being the SW signature and/or VR signature. A storage holds said one or more ANS parameters stored at the previous authentication. For example, the one or more ANS parameters may be stored in memory 261 of receiving device 260 (Bob). The processing circuitry 262 obtains the stored one or more ANS parameters from said memory 261 and performs the authentication of the transmitting device 250, based on the determined current values of the one or more ANS parameters and the obtained value of the one or more ANS parameters stored. The result of said authentication may be positive (i.e. the communication device is legitimate) or negative (i.e. the communication device is non-legitimate).

In general, at the receiver, before the above-mentioned processing, the signal may be received over multiple antenna elements of the ELAA, amplified, and transformed into a specific domain (e.g. frequency and/or angle domains) by a transformation, such as FFT or DFT (Discrete Fourier Transformation), corresponding to the respective inverse transformation which has been applied at the encoder.

In order to determine ANS parameters from the received signal that Alice and/or the attacker transmit over the wireless channel, said channel needs to be modeled, so as to represent the SW and VR signatures. As already explained above, Fig. 3 shows an example implementation of a system with three nodes: a legitimate node Bob 320 equipped with an ELAA array consisting of $N_B$ antenna elements 370-1 to 370-$N_B$, a transmitting node Alice 310 equipped with $N_A$ antenna elements 380-1 to 380-Nc, and an attacker 330 (eavesdropper) equipped with $N_E$ antenna elements 390-1 to 390-$N_E$. Further, there may be $L_X$ scatterers between the nodes Bob and Alice / attacker, respectively. In the present disclosure, the wireless channel between nodes Alice, attacker to the Bob node is modeled as a double scattering model, in which the number of $N_B$ reception antenna elements of the antenna array, the number of $N_C$ transmission antenna elements, and the number of $L_X$ scatterers are associated with the wireless channel. There may be two types of scattering clusters placed in the wireless environment: one cluster near to nodes Alice / attacker (X nodes) called X-cluster and one cluster near to the Bob node called Bob-cluster.

For simplicity of the discussion, it is assumed here that the X-cluster placed near Alice / attacker is visible to all antenna elements of Alice and the attacker. In turn, the Bob-cluster is visible only to a sub-portion of the reception antenna elements at the XL array of Bob, creating the VRs in a region of the XL array (overlapped and/or non-overlapped VRs). In the example of Fig. 3, there are three scatterers (e.g. scattering clusters), which are visible to Alice and the attacker. This means that, in general, signals transmitted from Alice and/attacker may be scattered by all three scatterers. In contrast, among the $N_B$ reception antenna elements of Bob, scatterer 340-1 is only visible to a portion of the $N_B$ antenna elements, including reception antenna elements 370-1 to 370-m, which form VR1. Similar applies to VR2 and VR3 visible only to a respective portion of the $N_B$ antenna elements. Note that, since the antenna elements within a given VR receive the signal from the same cluster of scatterers (e.g. antenna elements 370-1 to 370-m from VR1), the channel responses associated with these antennas are highly correlated. Hence, the wireless link between Bob and the scatterers can be described with the number of $L_X$ paths, with a complex channel response.. Since the $L_X$ scatterers cause the visibility regions, the number of VRs is limited to a maximum number of $L_X$ visibility regions.

Accordingly, above wireless channel is modeled as:

$$H_{CB} = \sum_{l=1}^{L_X} \alpha_l \; \boldsymbol{a}\left(\theta_B^l, r_B^l\right) \; \boldsymbol{a}^H\left(\theta_C^l, r_C^l\right) \qquad (1)$$

where: $\alpha_l$ is a complex channel gain of $l$-th path, $\theta_B^l$ is an angle of arrival, AoA, of the signal received by the apparatus over the $l$-th path, $\theta_C^l$ is an angle of departure, AoD, of the signal transmitted by the communication device over the $l$-th path, $r_B^l$ is a distance of $l$-th scatterer to a center of the reception antenna elements, $r_C^l$ is a distance of $l$-th scatterer to a center of the transmission antenna elements, and $\boldsymbol{a}\left(\theta_{B/C}^l, r_{B/C}^l\right)$ is a near-field steering vector at the $l$-th path for the reception antenna elements and transmission antenna elements. The near-field steering vector is defined as:

$$\boldsymbol{a}\left(\theta_{B/C}^l, r_{B/C}^l\right) = \frac{1}{N}\left[e^{-j\frac{2\pi}{\lambda}\left(r_1^l - r_{B/C}^l\right)}, \dots, e^{-j\frac{2\pi}{\lambda}\left(r_N^l - r_{B/C}^l\right)}\right]^T \qquad (2)$$

where $N = \{N_B, N_C\}$, $\lambda$ is the signal wavelength, and $r_n^l$ is a distance between the $l$-th scatterer and an $n$-th antenna element of the reception antenna elements and transmission antenna elements. Said distance is given as:

$$r_n^l = \sqrt{\left(r_1^l\right)^2 + (n-1)^2 \, d^2 - 2 \, r_1^l \, (n-1) \, d \, sin(\theta_{B/C}^l)} \qquad (3).$$

where $d$ is an inter-element spacing.

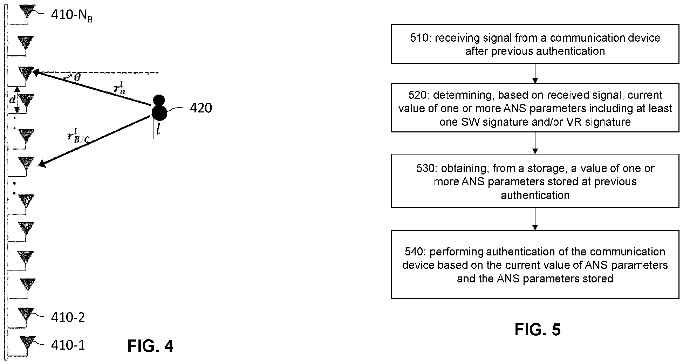

Fig. 4 illustrates how the angles and distances relate to the communication partners Bob and Alice/attacker (i.e. C = A (Alice) or attacker/eavesdropper (E)) forming a respective channel response $\boldsymbol{H}_{CB}$ in the presence of $L_X$ scatterers. It is noted that, for purposes of clear presentation, Fig. 4 depicts only one scatterer. The inter-element spacing d refers to a distance between adjacent antenna elements (reception, transmission). The term adjacent means spatial neighboring.

For n = 1, the distance $r_n^l$ in Eq. (3) is the center of the reception antenna elements and of the transmission antenna elements. The center may be a mid-position of positions of the (reception, transmission) antenna elements, which may be given as an average position of the $N_B / N_C$ positions of the $N_B / N_C$ antenna elements. Accordingly, $n$ in above Eq. (2) and (3) refers to an index labeling $n$ - $th$ antenna element, with $n = [1, ... , N]$ and $N = \{N_B, N_C\}$. It is noted that the angles $\theta_{B/C}^l$ (AoA/AoD) are taken with respect to a direction perpendicular to a direction of arrangement of the reception/transmission antenna elements. This is one possibility of defining the angles AoA/AoD with respect to a reference direction (orientation). Alternatively, the AoA and/or AoD may be defined with respect to the axis of arranging the reception and/or transmission antenna elements. In this case, the sine-term in Eq. (3) is to be replaced with cosine term.

Equations (1) to (3) represent an example of channel re-representation that incorporates effects of both Spherical Wavefront (SW) and Visibility Region (VR). It is important to note that the channel model may be represented using any suitable representation method. The above example of the wireless channel model is not limiting, meaning any other model of the wireless channel may be used instead as long as it such model is suitable for ELAA, so as to account for SW and/or VR effects. As noted earlier, the number $N_B$ of the reception antenna elements are $N_B \gg 1$, so as to represent an XL antenna array. This means that Bob performs the PLA in an ELAA environment characterized by SW effects and/or VR effects. In turn, the number of transmission antenna elements $N_C$ of Alice and/or $N_E$ of the attacker may not be an (X)XL antenna array, so that the wireless environment of Alice and/or the attacker may not have SW and/or VR signatures. However, this is not limiting in that the environment of the transmitter, namely of Alice and/or the attacker may also have SW and/or VR fingerprints in case the number of transmission antenna elements $N_C$ of Alice and/or $N_E$ of the attacker are (X) XL.

It is important to highlight that, while $\boldsymbol{H}_{cB}$ can be used directly to extract a signature for PLA such as a SW and/or VR signature, leveraging a beamspace representation of the channel response $H_{CB}^{bs}$ and exploiting it in that domain may offer greater efficiency. Generally, due to the sparsity of MIMO channels in the beamspace domain at high frequencies, a beamspace representation may be advantageous, as it may allow further for a more efficient representation and estimation of channel parameters, a reduced processing overhead, and improved noise robustness. Such noise-robust PLA has been developed and demonstrate but for far-field propagation in MIMO networks. In the context of beamspace representation in wireless communication, "noise" refers to any unwanted interference or disturbance that affects the received signal. The beamspace representation can also improve the noise robustness of the channel estimation process. This is because the beamspace channel is less sensitive to noise compared to the original spatial domain. The noise in the beamspace domain is typically less correlated with the signal, which helps in reducing the noise impact on the estimation accuracy.

Similar to the advantages of beamspace representation in the far field, the beamspace representation in the near field has also been explored, uncovering new characteristics in the beamspace domain to improve VR identification in the system. However, due to the array non-stationarity in signal propagation from the XL array within XL-MIMO networks, the distance and angle dependencies of the near-field propagation can influence the channel representation in the beamspace domain. The spatial-domain channel response $\boldsymbol{H}_{CB}$ and the beamspace-domain channel response $H_{CB}^{bsXB}$ of the MIMO channel are linked by a spatial discrete Fourier transform (DFT) represented by the unitary matrix U. Thus, the beamspace representation of the spatial channel can be expressed as:

$$H_{CB}^{bs} = U_B H_{CB} U_C^* \qquad (4)$$

where $U_B \in C^{N_B \times N_B}$ and $U_C \in C^{N_C \times N_C}$ represent the unitary DFT matrices at the receiver 250 (Bob) and transmitter (260) (Alice, attacker) side, respectively.

Generally, based on the estimated channel between the C node (Alice, attacker) and Bob node (the XL-MIMO node), the maximum number of VRs in the environment equals the number of principal components observed in the beamspace domain representation of the estimated spatial channel. A principal component refers to a component obtained by component analysis of the channel response transformed into the beamspace. Said component analysis may be performed, for example, by diagonalizing the beamspace-represented channel response providing Eigenvectors and Eigenvalues, with the largest Eigenvalues representing the dominant subchannels according to their weight as determined by the respective Eigenvalue. Conversely, the angular coordinates (virtual AoDs and virtual AoAs) of each principal component provide the angular locations of environmental clusters concerning the X and Bob nodes. These clusters may cause different VRs on the XL array. Thus, any alteration in these principal components can provide insights into how the VRs are distributed over the XL array. It's worth noting that the full width of the main lobe at the half-power level is inversely proportional to the aperture size of the antenna array used to generate this beam. Additionally, for a given principal component in the beamspace domain, its beamwidth determines the size of the associated VR on the XL array.

As noted earlier, the ANS-based PLA of the present disclosure includes training and verification, where one or more ANS parameters are extracted from the received signal, with at least one ANS parameter being a SW signature and/or VR signature. With the current value of one or more ANS parameters and stored one or more ANS parameters being known, the transmission device 250 in Fig. 2b (Alice / attacker) may be authenticated by comparing the current value and the stored value. The authentication is determined to be successful, if a predefined conditions is fullfilled. In this case, the transmission device 250 refers to legitimate user Alice. in turn, if said predetermined conditions is not fullfilled, the authentication is not successful. In this case, the transmission device 250 refers to an illegitimate user (attacker). The comparing may include determining a distance for the one or more determined ANS parameters that represent signatures in a feature / signature space. In other words, the feature space is spanned by the one or more ANS parameters that may be referred to as $(x_i, y_i, z_i)$, with index i referring to i-th path. In the example, there are three features / signatures $x_i$, $y_i$, and $z_j$ that may define a signature vector within the feature / signature space. Said space may be also referred to as ANS space or ANS domain, with said signatures incluiding at least one of SW signature and/or VR signature. Within the ANS space, a respective distance may be defined as

$$d_i^{ANS} = \sqrt{x_i^2 + y_i^2 + z_i^2}$$

. The distance may refer to a reference point $(0,0,0)$ in the ANS space. Alternatively, the distance may be taken with respect to a reference point $(x_0, y_0, z_0)$ associated with a finite ANS distance

$$d_0^{ANS} = \sqrt{x_0^2 + y_0^2 + z_0^2}$$

. It is noted that the ANS distance may be determined based on any metric suitable to calculate distance, including Euclidian norm etc. or any other suitable feature metric to measure distances between features / signatures. The predefined condition may be based on above ANS distance and a pre-configured threshold $\eta_{th}$. In this case, comparing of the current and stored ANS parameters may include determining the ANS distance of the current and stored ANS parameters and calculating a difference between the ANS distances. If said difference is equal to or lower than the threshold $\eta_{th}$, the authentication may be determined as successful. IF the ANS parameter difference exceeds $\eta_{th}$, the authentication would be not successful. Using an ANS distance to determine success or failure of an authentication is not limiting. Alternatively or in addition, the ANS-based PLA may include comparing components individually. For example, assume there are SW signature and VR signature for the ANS parameters. Hence, the current and stored SW signature may be compared by calculating their distance and comparing the SW distance against a threshold $\eta_{th}$ pre-configured for SW signature. Similarly, the current and stored VR signature may be compared by calculating their distance and comparing the SW distance against a threshold $\eta_{th}$ pre-configured for VR signature. Hence, in this example, a predefined condition for successful (not successful) authentication may be that the respective distance of the SW signature and of the VR signature is equal to or less (greater) than their respective threshold. Note that, as discussed above, the SW signature may include any of any of received power, path gain, path loss, Angle of Arrival, AoA, K-factor, phase, amplitude, spatial coherence, cluster scattering, and SW curvature. Likewise, the VR signature may include any of size of the VR, received power, path gain, path loss, K-factor, phase, amplitude, spatial coherence, cluster scattering, ratio of number of antenna elements of the antenna array overlapping with a different VR and the size of said VR, number of VRs, types of VRs, evolution of the VRs, and distribution of the VRs within the antenna array. Any of the above listed parameters may vary representing the array non-stationarity as a result of the SW phenomenon and VR phenomenon, respectively. In other words, the SW axis and the VR axis within the ANS space may span a multi-dimensional SW sub-space and VR sub-space. Thus, the ANS-based PLA may be performed in a high-dimensional space of signatures, allowing for performing the PLA accurately. The ANS space and/or the ANS dimension may be adapted in account of accuracy and signal processing overhead for extracting the respective ANS parameters.

In the following, the ANS-based PLA of the present disclosure is detailed that includes a training phase and a verifiction stage.

*A. Training Stage:*

1. Bob verifies Alice's identity using higher-layer protocols based on the received signal. Such upper layer authentication may be based on an extensible authentication protocol (EAP)-based authentication methods and/or transport layer security (TLS)-based methods. Hence, at this stage, Bob can be sure that Alice is a legitimate user.

2. The training stage of the PLA process assumes the existence of only Alice and Bob nodes.

3. Bob estimates Alice's channel characteristics using the received signal. Said received signal may be an authenticated signal (e.g. an authentication response or message or the like - authenticated by an upper layer).

4. One or more ANS parameters is (are) extracted and stored in a database of a storage such as memory 261, during the training stage of the PLA process, as previously explained. The storage may be memory 261 of receiving device 260 of Fig. 2b. The ANS parameters may include at least one ANS parameter that is a SW signature and/or a VR signature for the antenna array. These ANS parameters serve as authentic reference for ANS parameters to check authenticity of received subsequent signal / messages that may be send by Alice or the attacker.

5. In a dynamic environmental scenario, a tracking process and equations are initialized at time ( $t_0$.).

6. The initial stage of the filter is derived from the physical layer characteristics extracted from the estimated channel at initial time ($t_0$). This means that the parameters of the filter are initialized by determining these parameters from the channel estimated at the start of the PLA process. It is noted that estimated channel means estimating a signature of the channel, which may be used later in the verification stage.

B. *Verification Stage:*

1. During the verification stage of the ANS-based PLA process, it is assumed that Alice 310, Bob 320, and the potential attacker 330 nodes are present. Bob detects and extracts the signature from the received signal at time $t_i$ after time instance $t_0$ at which Alice has been already authenticated and ANS parameters have been extracted.

2. In this stage, Bob compares the ANS signature extracted at time $t_i$ with the stored ANS signature stored in the database from time $t_{i-1}$ to determine the legitimacy of the transmitted node, which may be transmitting device 250 of Alice or of the attacker. Thus, starting with time instance $t_0$ (i.e. time index i = 1) and continuing with time instances $t_1$, $t_2$, ..., $t_{i-1}$, $t_i$, ... etc. the value of the one or more ANS parameters that are stored in the data base (e.g. stored in memory 261) may be updated. Adjacent time instances $t_i$ - $t_{i-1}$ define a time interval that determines how often current ANS parameters are extracted from the received signal. Hence, the time interval corresponds to a repetition period which may be predefined. The verification is achieved through an D-hypothesis test:

Hypothesis $\eta_0 : \eta_L = \|d^{ANS}(t_i) - d^{ANS}(t_{i-1})\| \leq \eta_{th}$ represents a scenario where the legitimate node (Alice) sent the received signal.

Hypothesis $\eta_1 : \eta_L = \|d^{ANS}(t_i) - d^{ANS}(t_{i-1})\| > \eta_{th}$ corresponds to a situation where the legitimate node (Alice) did not send the received signal (indicating a potential attack).

As discussed above, $\eta_{th}$ signifies a pre-configured threshold that ensures the detection and false alarm rates are met. The distance $d^{ANS}$ refers to the distance of ANS features within the ANS space, and includes at least the SW signature and/or the VR signature, each of which may include any of received power, path gain, path loss, Angle of Arrival, AoA, K-factor, phase, amplitude, spatial coherence, cluster scattering, and SW curvature, and respectively any of size of the VR, received power, path loss, path gain, phase, amplitude, spatial coherence, cluster scattering, K-factor, ratio of number of antenna elements of the antenna array overlapping with a different VR and the size of said VR, number of VRs, types of VRs, evolution of the VRs, and distribution of the VRs within the antenna array.

The above hypothesis test is performed with respect to preceding time $t_{i-1}$ and a current $t_i$. Instead of using adjacent times, the hypothesis test may be performed by storing a predefined number of ANS signatures in the storage, and compare the current channel signature at time $t_i$ with ANS signatures stored in the data base that are older than just ANS signatures at time instance $t_{i-1}$. This means that the hypothesis test may be performed using a history of ANS signatures. A history length of ANS signatures may be characterized by a pre-configured number of stored ANS signatures. In this case, changes in the ANS signature may be determined with respect to time instances that are larger than the time between the current time $t_i$ and previous $t_{i-1}$. In this manner, instantaneous changes that may not be attributed to an attacker (e.g. instantaneous drop in QoS of the legitimate transmitter) may be smoothed, and may prevent erroneous verification of the legitimate transmitter being an attacker.

3. If authentication fails (i.e., $\eta_1$ occurs) or the system surpasses a predefined tracking period $T_o$, with time instance $t_i$ >

$T_o$, the PLA process reverts to the initial step. Accordingly, once there is an authentication failure within $T_o$, the upper-layer authentication of Alice is repeated. The tracking period sets a time constraint, so that the very last verified ANS signature may not be tracked and used to update the data base with reference to the current tracking period, even if authentication may have been successful. Therefore, the authentication by an upper layer is periodically performed with the predefined tracking period.

4. On successful verification within the tracking period ($t_i \leq T_o$), i.e. $\eta_0$ occurs , the ANS signatures in the database undergoes tracking, using filters such as the extended Kalman filter and is subsequently updated. This means that the tracking filter takes the current database vector (i.e. the PLA signature stored in the database) as input and processes it, and provides the next predicted database vector. The database is updated by this predicted database vector. The Kalman filter is a well-known filter generally used for tracking and predicting. Alternatively, other filters may be used, such as unscented Kalman filter, least mean squared filter or the like.

Hence, the stored ANS value is updated in case of successful authentication. Therefore, the stored value of the ANS parameters is updated when a difference between the current value of the one or more ANS parameters and the stored value of the one or more ANS parameters is equal to or smaller than a predetermined threshold. In the above discussed example of the ANS-based PLA, the predefined threshold would be $\eta_{th}$. In other words, the data base signature stored in memory 261 of receiving device 260 in Fig. 2b is overwritten by the tracked and authenticated ANS signature. This ensures that the data base holds the most recent ANS signatures, and enables an ANS-based PLA in dynamic communication environments where changes in ANS signatures are more likely and more pronounced than in static environments (e.g. receiving device 260 and/or transmitting device 250 are immobile).

5. The system then repeats the observation of the received signal, following steps 1 through 4 iteratively. This means that, within the predefined repetition period $\Delta t = t_i - t_{i-1}$, there is a repeated execution of (i) determining of the current value of the one or more ANS parameters, (ii) performing of authentication of the communication device (i.e. transmitting device 250), and (iii) updating of the database.

The above described processing executed by the apparatus, such as the reception device 260 of Fig. 2b and the transmitting device 250 of Fig. 2a have their corresponding procedural steps for the PLA approach. Fig. 5 shows the ANS-based PLA procedure according to the present disclosure, where a signal is received by an antenna array over a wireless channel from a communication device after a previous authentication (step 510). As noted above, the communication device may be the transmitting device 250 in Fig. 2a representing Alice and/or the attacker. In step 520, a current value of one or more antenna-non-stationary (ANS) parameters is then determined, based on the received signal. The one or more ANS parameters include at least one ANS parameter being a spherical wavefront (SW) signature and/or a visibility region (VR) signature for the antenna array. In step 530, a value of the one or more ANS parameters that are stored in the previous authentication is obtained from a storage. The storage may be the memory 261 of receiving device 261 shown in Fig. 2b. The ANS parameters may be stored in a data base that is held by the storage. Finally, based on the current value of the one or more ANS parameters and the obtained value of the one or more ANS parameters stored, the communication device is authenticated in step 540.

Above, various ANS attributes (ANS signatures) based on SW signature and VR signature have been provided which may be leveraged in ELAA for PLA. These features can be extracted from the estimated channel $H_{CB}$ or after transforming it into beamspace domain $H_{CB}^{bs}$ , as discussed before.

It is noted that the PLA approach may be extended while staying within the scope of the present disclosure, including the following enhancements:

- Leveraging joint VR and SW based features over ELAA that are uniquely identifiable can enhance PLA.

- Integration of radio frequency (RF) hardware features and impairments with VR and SW based features further enhances the signatures of the present disclosure.

- Allowing extraction of multiple signatures from the same environment, even in cases of long coherence time (slowly varying propagation environment), using different antenna configurations.

- Exploring the exploitation of VR and SW concepts in reconfigurable intelligent surface (RIS) assisted systems, facilitating the establishment of pervasive near-field wireless propagation environments through RIS. The RIS can be positioned near any transmitter or receiver node.

- The respective features can be extracted from the estimated channel $H_{CB}$ or after transforming it into the beamspace domain $H_{CB}^{bsXB}$. The features can then be merged in both power and beamspace domains to create a more robust signature.

- Although VR and SW concepts of the present disclosure are showcased for authentication at the Bob side, extending them to exploit VR and SW concepts at both Bob and X nodes (Alice, attacker) is possible assuming ELAA at those nodes.

- Integration of radio frequency (RF) hardware features (such as mutual coupling in MIMO systems and spatial wideband effect in massive wideband signaling MIMO systems) and impairments (such as CFO, I/Q imbalance, etc.) further enhances the signatures of the present disclosure.

- The ANS-based PLA of the present disclosure is compatible with various relay types including active and passive relays, smart relay, backscatter, network control repeater, and similar concepts.

- The ANS-based PLA technique of the present disclosure is effective in both TDD and FDD transmissions, breaking the strictness of conventional PLA techniques limited to TDD transmission scenarios.

- Enhancements to the signatures through signal/waveform design and the use of machine-learning (ML) and deep-learning (DL) algorithms can be realized.

- The ANS-based PLA approach of the present disclosure accommodates variations in the number of antennas, types of arrays, and resultant effects on beamwidth due to changes in antenna number.

- Addressing the problem of unequal numbers of array sizes at the base station (BS) and user equipment (UE) side enhances the practicality of the approach of the present disclosure.

- The approach of the present disclosure is relevant not only for bolstering security in wireless sensing applications, but also for improving other critical performance indicators in future wireless networks. These enhancements encompass elevated data rates, expanded network capacity, heightened reliability, minimized latency, massive connectivity, wide coverage, quality of service (QoS) aware transmission, efficient power consumption, efficient localization, efficient identification, Simultaneous Wireless Information and Power Transfer, and efficient sensing.

- The PLA technique of the present disclosure can be applied to different networks, such as NTN, CoMP, JRC, and localization.

- The PLA approach of the present disclosure extends to scenarios involving cell-free enabled near-field, reconfigurable intelligent surface (RIS) enabled near-field, movable antenna (MA) enabled near-field, or any other method capable of generating similar effects.

In view of the problems and drawbacks of the current approaches as discussed before, the approach of the present disclosure may provide the following solutions:

1. Offering a flexible approach for multi-user authentication, which leads to increased system capacity by allowing differentiation among users and the detection of attackers.

2. Applicability to both rich and sparse environment.

3. Applicability in dynamic and static environments, where in time-varying environments, authentication performance can be improved using different tracking filters.

4. Applicability in both time-division duplex (TDD) and frequency-division duplex (FDD) transmissions and reception.

5. Applicability to different networks, such as Non-Terrestrial Networks (NTN), Coordinated Multi-Point (CoMP), Joint Radar and Communications (JRC), and localization.

6. Enhanced PLA robustness and PLA accuracy by joint-combination of the ANS-based PLA approach of the present disclosure with channel-based attributes with hardware-based features (mutual coupling, beam squint) and im-

18

perfections (i.e., phase noise, CFO), thus attaining an increased level of security in the presence of different types of attackers.

7. PLA approach adaptable and flexible to array size.

8. Security is compromised in the case of co-located attacks.

The present disclosure may be applicable to any wireless communication network to provide protection against eavesdroppers, spoofing, and Sybil attacks. However, standards like 3GPP-based cellular and IEEE 802.11-based Wi-Fi networks, or any wireless network are particularly relevant to the present disclosure. Furthermore, the described PLA approach can be implemented on any device, system or network capable of supporting any of the aforementioned standards, for instance: Long Term Evolution (LTE), LTE-advanced, Advance Mobile Phone Service (AMPS), 5G New Radio (NR), or other known signals that are used to communicate within a cellular wireless network with different technologies such as massive MIMO, multi-user MIMO, multi-cell MIMO, cognitive radio networks, and IoT access points.

In summary, the present disclosure provides for techniques and methods to perform ANS-based PLA for the next-generation communication networks to build a fast and robust PLA framework in wireless communication systems. As such, it is applicable to the industry which is interested in high frequency communication networks including millimeter-wave and terahertz, massive MIMO, single-user and multi-user MIMO, and multi-cell MIMO technologies.

*Implementations in software and hardware*

It is noted that although embodiments and examples of the present disclosure were provided in terms of an apparatus above, the corresponding method provides the functionality described by the apparatus are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the control device 300 may be stored as one or more instructions or code on a non-transitory computer readable storage medium. The computer-readable media includes physical computer storage media, which may be any available medium that can be accessed by the computer, or, in general by the processing circuitry 320. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

For example, the program code may cause the processing circuitry 261 (e.g. including one or more processors) to operate as a special purpose computer programmed to perform the techniques disclosed herein.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

*Selected embodiments and examples*

According to an aspect, an apparatus is provided for physical layer authentication, the apparatus comprising: an antenna array for receiving a signal; a receiver configured to: receive, over a wireless channel, the signal from a communication device after a previous authentication; and processing circuitry configured to: determine, based on the received signal, a current value of one or more antenna non-stationary, ANS, parameters including at least one ANS parameter being a spherical wavefront, SW, signature and/or a visibility region, VR, signature for the antenna array; obtain, from a storage, a value of the one or more ANS parameters stored at the previous authentication; and perform authentication of the communication device based on the determined current value of the one or more ANS parameters and the obtained value of the one or more ANS parameters stored.

In an exemplary implementation, the SW signature includes any of received power, path gain, path loss, Angle of Arrival, AoA, K-factor, phase, amplitude, spatial coherence, cluster variation, and SW curvature. In another implementation, the VR signature includes any of size of the VR, received power, path gain, path loss, K-factor, phase, amplitude, spatial coherence, cluster variation, ratio of number of antenna elements of the antenna array overlapping with a different VR and the size of said VR, number of VRs, types of VRs, evolution of the VRs, and distribution of the VRs within the antenna array.

According to an exemplary implementation, the wireless channel is modeled as being associated with: a number of $N_B$ reception antenna elements of the antenna array, with $N_B \gg 1$; a number of $N_C$ transmission antenna elements, with $N_C$ equal to 1 or larger; and a number of $L_X$ scatterers, with $L_X$ equal to 0 or larger;

$$H_{CB} = \sum_{l=1}^{L_X} \alpha_l \; \boldsymbol{a}\left(\theta_B^l, r_B^l\right) \; \boldsymbol{a}^H\left(\theta_C^l, r_C^l\right)$$

where: $\alpha_l$ is a complex channel gain of $l$-th path; $\theta_B^l$ is an angle of arrival, AoA, of the signal received by the apparatus over the $l$-th path; $\theta_C^l$ is an angle of departure, AoD, of the signal transmitted by the communication device over the $l$-th path; $r_B^l$ is a distance of $l$-th scatterer to a center of the reception antenna elements; $r_C^l$ is a distance of $l$-th scatterer to a center of the transmission antenna elements; $\boldsymbol{a}\left(\theta_{B/C}^l, r_{B/C}^l\right)$ is a near-field steering vector at the $l$-th path for the reception antenna elements and transmission antenna elements defined as:

$$\boldsymbol{a}\left(\theta_{B/C}^l, r_{B/C}^l\right) = \frac{1}{N}\left[e^{-j\frac{2\pi}{\lambda}\left(r_1^l - r_{B/C}^l\right)}, \dots, e^{-j\frac{2\pi}{\lambda}\left(r_N^l - r_{B/C}^l\right)}\right]^T$$

where $N = \{N_B, N_C\}$, $\lambda$ is the signal wavelength, and $r_n^l$ is a distance between the $l$-th scatterer and an $n$-th antenna element of the reception antenna elements and transmission antenna elements, respectively, given as:

$$r_n^l = \sqrt{\left(r_1^l\right)^2 + (n-1)^2 d^2 - 2r_1^l\,(n-1)\,d\,\sin(\theta_{B/C}^l)}$$

with d being an inter-element spacing.

In an exemplary implementation, the performing of authentication of the communication device includes: comparing the current value of the one or more ANS parameters with the stored value of the one or more ANS parameters; determining the authentication of the communication device as successful, in case a predefined condition is fulfilled; and determining the authentication of the communication device as not successful, in case the predefined condition is not fulfilled.

For example, the processing circuitry is further configured to update the value of the one or more ANS parameters stored in the storage. In another example, the processing circuitry is further configured to update the stored value based on the current value when the authentication of the communication device is successful.

In an exemplary implementation, the determining of the current value of the one or more ANS parameters; the performing of authentication of the communication device; and updating of the database is repeatedly executed with a predefined repetition period. For example, the stored value is updated when a difference between the current value of the one or more ANS parameters and the stored value of the one or more ANS parameters is equal to or smaller than a predetermined threshold.

In a further exemplary implementation, the previous authentication is an authentication performed by an upper layer.

Moreover, the processing circuitry is further configured to perform an authentication by an upper layer periodically with a predefined tracking period.

According to an aspect, a method is provided for physical layer authentication comprising steps of: receiving, by an antenna array, a signal over a wireless channel from a communication device after a previous authentication; determining, based on the received signal, a current value of one or more antenna non-stationary, ANS, parameters including at least one ANS parameter being a spherical wavefront, SW, signature and/or a visibility region, VR, signature for the antenna array; obtaining, from a storage, a value of the one or more ANS parameters stored at the previous authentication; and performing authentication of the communication device based on the determined current value of the one or more ANS parameters and the obtained value of the one or more ANS parameters stored.

The examples and exemplary implementations described above for the apparatus apply in the same manner to the method for physical layer authentication. In particular, the processing circuitry may be further configured to perform the steps of one or more of the above-described embodiments, examples, and exemplary implementations.

Still further, a computer program is provided, stored on a non-transitory and computer-readable medium, wherein the computer program includes instructions which when executed on one or more processors perform the steps of the method.

The PLA approach of the present disclosure discussed above may provide one or more or the following advantages in addition to those already listed above:

- It offers a flexible approach for multi-user authentication, which leads to increased system capacity by allowing differentiation among users and the detection of attackers.

- Applicability to both rich and sparse environments. Moreover, PLA in dynamic and static environments is supported, where in time-varying environments, authentication performance can be improved using different tracking filters.

- The PLA technique of the present disclosure breaks the strictness of applying the PLA techniques on only TDD transmission mode and can be effective in both TDD and FDD transmissions.

- Applicability to different networks, such as NTN, CoMP, JRC, and localization.

- The robustness and accuracy of the PLA of the present disclosure can be further improved by joint-combining of the channel-based attributes with the hardware-based features (mutual coupling, beam squint) and imperfections (i.e., phase noise, CFO) with the ANS signatures, thus attaining an increased level of security in the presence of different types of attackers.

- Adaptability to array size.

- Security is compromised in the case of co-located attacks.

As discussed above, the present disclosure utilizes the array non-stationarity (ANS) features of the near field of an extremely large antenna array (ELAA). While the near field effect is primarily enabled by ELAA, other technologies can also contribute to the near-field effect. These technologies include (but not limited to):

- **Different ELAA Architectures:** Including co-located ELAA, distributed ELAA, modular ELAA, and uniform sparse ELAA.
  Extremely Large Antenna Arrays (ELAAs) can be configured in several ways to optimize performance for different applications. Co-Located ELAA involves densely packing of all antenna elements at a single location, offering high spatial resolution and simplified beamforming. Distributed ELAA spreads antenna elements over a larger area, enhancing spatial diversity and resilience to obstacles, but requiring more complex signal processing. Modular ELAA consists of smaller, self-contained modules that provide flexibility, scalability, and ease of maintenance. Lastly, Uniform Sparse ELAA uniformly spaces elements with larger gaps, reducing mutual coupling and costs, but necessitating advanced algorithms to manage potential grating lobes and complex beamforming. These different types of ELAA can all enable near-field effects based on their dimensions, balancing coverage, resolution, complexity, and cost to meet specific requirements.

- **Cell-Free Architecture:** Involves deploying a large number of nodes in a distributed manner.

- **RIS-Assisted Near Field Effect:** Utilizing reconfigurable intelligent surfaces.

- **Movable Antenna Assisted Near Field Effect:** Employing antennas with varying numbers and controllers for inter-element spacing, creating various identifiable features in the near field.
  The movable antenna enables flexible movement within a two or three-dimensional region using a driver, such as a step motor along a slide track. Specifically, in a movable antenna structure, the spacing between antenna elements can be adjusted, resulting in changes to their observed characteristics corresponding to the received signal. This capability can be used to create an effective, unique channel-dependent signature for physical layer authentication in the near field based on the approach of the present disclosure.

Additionally, the concept can be extended to the use of multiple units of these technologies, such as multi-ELAA or multi-RIS setups. In such cases, the position of these units and their integration - including different spatial orientations and deployments (centralized or distributed) - are taken into account. These technologies can be implemented at any node based on its capabilities, such as transmitter, receiver, or relay.

Element activations (e.g., antenna activation) in these architectures can be leveraged for efficient unique user signatures. Elements within the ELAA or any other architecture can function either actively or passively. Active and passive elements exhibit distinct behaviors in terms of their observed characteristics. In this context, varying the activation of different antenna elements in the array can alter the observed signature.

According to some embodiments, the processing circuitry and/or the transceiver is embedded in an integrated circuit, IC.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. An apparatus for physical layer authentication, the apparatus comprising:

   an antenna array for receiving a signal;
   a receiver configured to:

      - receive, over a wireless channel, the signal from a communication device after a previous authentication; and

   processing circuitry configured to:

      - determine, based on the received signal, a current value of one or more antenna non-stationary, ANS, parameters including at least one ANS parameter being a spherical wavefront, SW, signature and/or a visibility region, VR, signature for the antenna array;
      - obtain, from a storage, a value of the one or more ANS parameters stored at the previous authentication; and
      - perform authentication of the communication device based on the determined current value of the one or more ANS parameters and the obtained value of the one or more ANS parameters stored.

2. The apparatus according to claim 1, wherein
   the SW signature includes any of following parameters received power, path gain, path loss, Angle of Arrival, AoA, K-factor, phase, amplitude, spatial coherence, cluster scattering, and SW curvature.

3. The apparatus according to claim 1 or 2, wherein
   the VR signature includes any of following parameters size of the VR, received power, path gain, path loss, K-factor, phase, amplitude, spatial coherence, cluster scattering, ratio of number of antenna elements of the antenna array overlapping with a different VR and the size of said VR, number of VRs, types of VRs, evolution of the VRs, and distribution of the VRs within the antenna array.

4. The apparatus according to any of claims 1 to 3, wherein the wireless channel is modeled as being associated with:

      - a number of $N_B$ reception antenna elements of the antenna array, with $N_B \gg 1$;
      - a number of $N_C$ transmission antenna elements, with $N_C$ equal to 1 or larger; and
      - a number of $L_X$ scatterers, with $L_X$ equal to 0 or larger;

$$H_{CB} = \sum_{l=1}^{L_X} \alpha_l \, a\left(\theta_B^l, r_B^l\right) \, a^H\left(\theta_C^l, r_C^l\right)$$

   where:

$\alpha_l$ is a complex channel gain of *l*-th path;

$\theta_B^l$ is an angle of arrival, AoA, of the signal received by the apparatus over the *l*-th path;

$\theta_C^l$ is an angle of departure, AoD, of the signal transmitted by the communication device over the *l*-th path;

$r_B^l$ is a distance of *l*-th scatterer to a center of the reception antenna elements;

$r_C^l$ is a distance of *l*-th scatterer to a center of the transmission antenna elements; $a\left(\theta_{B/C}^l, r_{B/C}^l\right)$ is a near-field steering vector at the *l*-th path for the reception antenna elements and transmission antenna elements defined as:

$$a\left(\theta_{B/C}^l, r_{B/C}^l\right) = \frac{1}{N}\left[e^{-j\frac{2\pi}{\lambda}\left(r_1^l - r_{B/C}^l\right)}, \dots, e^{-j\frac{2\pi}{\lambda}\left(r_N^l - r_{B/C}^l\right)}\right]^T$$

where $N = \{N_B, N_C\}$, $\lambda$ is the signal wavelength, and $r_n^l$ is a distance between the *l*-th scatterer and an *n*-th antenna element of the reception antenna elements and transmission antenna elements, respectively, given as:

$$r_n^l = \sqrt{\left(r_1^l\right)^2 + (n-1)^2 d^2 - 2r_1^l(n-1)d\sin(\theta_{B/C}^l)}$$

with *d* being an inter-element spacing.

5. The apparatus according to any of claims 1 to 4, wherein the performing of authentication of the communication device includes:

- comparing the current value of the one or more ANS parameters with the stored value of the one or more ANS parameters;
- determining the authentication of the communication device as successful, in case a predefined condition is fulfilled; and
- determining the authentication of the communication device as not successful, in case the predefined condition is not fulfilled.

6. The apparatus according to any of claims 1 to 5, wherein the processing circuitry is further configured to update the value of the one or more ANS parameters stored in the storage.

7. The apparatus according to claim 6, wherein the processing circuitry is further configured to update the stored value based on the current value when the authentication of the communication device is successful.

8. The apparatus according to any of claims 1 to 7, wherein:

- the determining of the current value of the one or more ANS parameters;
- the performing of authentication of the communication device; and
- updating of a database

is repeatedly executed with a predefined repetition period.

9. The apparatus according to any of claims 6 to 8, wherein the stored value is updated when a difference between the current value of the one or more ANS parameters and the stored value of the one or more ANS parameters is equal to or smaller than a predetermined threshold.

10. The apparatus according to any of claims 1 to 9, wherein the previous authentication is an authentication performed by an upper layer.

11. The apparatus according to any of claims 1 to 10, wherein the processing circuitry is further configured to perform an authentication by an upper layer periodically with a predefined tracking period.

12. A method for physical layer authentication comprising steps of:

receiving, by an antenna array, a signal over a wireless channel from a communication device after a previous authentication;
determining, based on the received signal, a current value of one or more antenna non-stationary, ANS, parameters including at least one ANS parameter being a spherical wavefront, SW, signature and/or a visibility region, VR, signature for the antenna array;
obtaining, from a storage, a value of the one or more ANS parameters stored at the previous authentication; and
performing authentication of the communication device based on the determined current value of the one or more ANS parameters and the obtained value of the one or more ANS parameters stored.

13. A computer program stored on a non-transitory and computer readable medium, wherein the computer program includes instructions which when executed on one or more processors perform the method according to claim 12.

Communication System CS

Transmitter Tx

Interface
ITF

Receiver Rx

**FIG. 1**

255

Memory
251

Processing
circuitry
252

Wireless
transceiver
253

User interface
254

250

**FIG. 2a**

265

Memory
261

Processing
circuitry
262

Wireless
transceiver
263

User interface
264

260

**FIG. 2b**

FIG. 3

410-N$_B$

$\theta$

$r_n^l$

$d$

$r_{B/C}^l$

420

$l$

410-2

410-1  **FIG. 4**

510: receiving signal from a communication device after previous authentication

520: determining, based on received signal, current value of one or more ANS parameters including at least one SW signature and/or VR signature

530: obtaining, from a storage, a value of one or more ANS parameters stored at previous authentication

540: performing authentication of the communication device based on the current value of ANS parameters and the ANS parameters stored

**FIG. 5**

**EUROPEAN SEARCH REPORT**

Application Number

EP 24 19 3893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Arslan Hüseyin ET AL: "Physical Layer Security for Wireless Sensing and Communication", IET Security Series, 1 January 2022 (2022-01-01), pages 1-359, XP093179568, Retrieved from the Internet: URL:https://digital-library.theiet.org/content/books/sc/pbse018e;jsessionid=30pawjjuj5igh.x-iet-live-01 * page 53, paragraph 1 - page 54, last paragraph * * page 69, paragraph 3 - page 70, paragraph 1 * * page 77, paragraph 1 - page 86, paragraph 1 * * figures 4.4, 5.1 * | 1-13 | INV. H04W12/06 H04W12/122 H04W12/79 |
| X | KIHERO ABUU B ET AL: "6G and Beyond Wireless Channel Characteristics for Physical Layer Security: Opportunities and Challenges", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 31, no. 3, 1 June 2024 (2024-06-01), pages 295-301, XP011972900, ISSN: 1536-1284, DOI: 10.1109/MWC.002.2300002 [retrieved on 2023-11-20] * abstract * * page 295, left-hand column, paragraph 1 - page 296, right-hand column, paragraph 5 * * page 298, right-hand column, paragraph 2 - page 299, left-hand column, paragraph 1 * * figure 1 * | 1-13 | |

**TECHNICAL FIELDS SEARCHED (IPC)**

H04W

The present search report has been drawn up for all claims

| Place of search | Date of completion of the search | Examiner |
|---|---|---|
| Munich | 16 January 2025 | López Monclús, I |

EPO FORM 1503 03.82 (P4C01)